# FASCICULE DE BREVET EUROPEEN

(11) **EP 2 537 623 B1**
(45) Date de publication et mention de la délivrance du brevet: **02.11.2016**
(21) Numéro de dépôt: 12184825.3
(22) Date de dépôt: 03.09.2009
(51) Int. Cl.: B23K 26/08

(54) **PROCÉDÉ DE SOUDAGE LASER DE TYPE CO2 AVEC BUSE À JET DYNAMIQUE**
VERFAHREN ZUM SCHWEISSEN MITTELS CO2 LASER MIT EINER DYNAMISCHEN STRAHLDÜSE.
CO2 LASER WELDING PROCESS USING A DYNAMIC JET NOZZLE.

(30) Priorité: 24.09.2008 FR 0856411
(43) Date de publication de la demande: 26.12.2012
(62) Demande divisionnaire de: 09741361.1
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Chouf, M. Karim, 95160 MONTMORENCY (FR); Lefebvre, M. Philippe, 78250 MEULAN (FR)
(74) Mandataire: Pittis, Olivier

(56) Documents cités:
- EP-A1- 1 920 872
- WO-A-2006/050043
- US-A- 4 390 774
- US-A- 5 618 454

## Description

La présente invention concerne un procédé de soudage laser suivant le préambule de la revendication 1 mettant en oeuvre un générateur laser de type CO₂ pour générer le faisceau laser de soudage et un gaz de protection dépourvu d'hélium.

Le soudage par faisceau laser est un procédé d'assemblage très performant car il permet d'obtenir, à des vitesses élevées, des profondeurs de pénétration très importantes si on les compare à d'autres procédés plus traditionnels, tel le soudage plasma, le soudage MIG (Metal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser 10⁶ W/cm².

Ces fortes densités de puissance provoquent une forte vaporisation de métal à la surface des pièces à souder qui, en se détendant vers l'extérieur, induit un creusement progressif du bain de soudage et conduit à la formation d'un capillaire de vapeur étroit et profond, appelé "*keyhole*" en anglais (= "trou de serrure") dans l'épaisseur des pièces, c'est-à-dire au niveau du plan de joint. Ce capillaire permet un dépôt direct de l'énergie du faisceau laser en profondeur dans l'épaisseur des pièces et ce, par opposition avec les procédés de soudage à l'arc plus conventionnels où le dépôt d'énergie est localisé à la surface.

Le capillaire de vapeur est constitué d'un mélange de vapeurs métalliques et de plasma de vapeurs métalliques dont la particularité est d'absorber le faisceau laser et donc de piéger l'énergie au sein du capillaire même.

La propagation du plasma métallique hors du capillaire donne lieu à une plume de plasma métallique chaude et rayonnante.

Un problème connu en soudage laser mettant en oeuvre un dispositif laser de type CO₂ générant un faisceau laser de longueur d'onde égale à 10.6 µm, est la formation d'un plasma parasite dans le gaz de couverture ou gaz de protection.

En effet, le plasma de vapeurs métalliques, en ensemençant en électrons libres le gaz de couverture ou gaz de protection, peut déclencher une ionisation dans ce dernier. L'ionisation du gaz de protection peut être entretenue par le faisceau laser incident et conduire à la formation d'un plasma de grande dimension dans le gaz de couverture juste au dessus de la plume de plasma métallique.

Or, ce plasma parasite dans le gaz de protection absorbe fortement le faisceau laser incident, ce qui est préjudiciable à l'opération de soudage. Ce phénomène de génération de plasma parasite dans le gaz de protection est connu sous le nom de « *Bremasstrahlung inverse* ». Le faisceau laser incident peut alors être fortement perturbé par le plasma de gaz de couverture.

L'interaction du plasma de gaz de couverture avec le faisceau laser peut prendre diverses formes mais, le plus souvent, cela se traduit par un effet d'absorption et/ou de diffraction du faisceau laser incident qui peut conduire à une réduction importante de la densité de puissance laser efficace à la surface de la cible, entraînant une diminution de la profondeur de pénétration, voire à une perte de couplage entre le faisceau et la matière et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser. Ainsi, il est très difficile de souder sous argon pur lorsque le générateur laser est de type CO₂, tandis que cette opération peut être réalisée avec beaucoup moins de problème avec un générateur laser de type YAG.

En général, en soudage laser avec générateur laser de type CO₂, on utilise comme gaz de couverture de l'hélium qui est un gaz à haut potentiel d'ionisation et qui permet de se prémunir de l'apparition du plasma de gaz de couverture et ce, jusqu'à des puissances laser d'au moins 45 kW.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Par ailleurs, la société L'AIR LIQUIDE™ commercialise sous la dénomination LASAL MIX™, des mélanges gazeux contenant de l'azote et de l'hélium ou de l'argon et de l'hélium, permettant d'obtenir sensiblement les mêmes résultats que de l'hélium pur, pour des puissances laser CO₂ inférieures à 12kW, la composition du mélange considéré étant choisie ou ajustée en fonction des paramètres opératoires, du faisceau laser et du matériau à souder.

Toutefois, ces mélanges gazeux contiennent aussi une proportion importante d'hélium, ce qui n'est pas idéal, notamment au plan économique.

De là, un problème qui se pose est de pouvoir réaliser un soudage par faisceau laser délivré par un générateur laser de type CO₂ pour générer le faisceau laser de soudage et un gaz de protection dépourvu d'hélium, qui permette d'obtenir une pénétration de soudage au minimum équivalente par rapport à un procédé de soudage laser mis en oeuvre dans les mêmes conditions opératoires mais utilisant de l'hélium ou un gaz à forte proportion d'hélium comme gaz de protection, c'est-à-dire plus de 50% en volume d'hélium, et/ou qui n'engendre pas ou peu d'apparition de plasma dans le gaz de couverture et ce, préférentiellement quelles que soient la puissance (jusqu'à 20 kW environ) et les conditions de focalisation du faisceau laser incident, et/ou qui ne conduise pas à une dégradation de la qualité de soudage, en termes d'aspect et de qualité métallurgique (porosités...) dans le cordon de soudure. Le document WO 2006/050043 A décrit un procédé de soudage laser suivant le préambule de la revendication 1.

Une solution selon l'invention est alors un procédé de soudage laser selon la revendication 1, d'une ou plusieurs pièces métalliques positionnées l'une contre l'autre selon un plan de joint, dans lequel :
a) on alimente une buse avec gaz ou un mélange gazeux et on distribue, au moyen de ladite buse, un jet de gaz de protection formé dudit gaz ou mélange gazeux en direction du plan de joint,
b) on opère, au moyen d'un faisceau laser généré par un générateur laser de type CO₂, une fusion et une vaporisation du métal constitutif des pièces métalliques conduisant à la formation d'une plume de plasma métallique au dessus du plan de joint,
   caractérisé en ce que :
   à l'étape a), on utilise un gaz ou mélange gazeux constitué de l'un ou plusieurs des constituants du groupe formé par Ar, N₂, CO₂ et O₂, et
d) on oriente ou on dirige le jet de gaz de protection délivré par la buse en direction de la plume de plasma métallique se formant au dessus du plan de joint de manière à ce qu'il vienne effleurer le sommet de la plume de plasma métallique et impacter l'une ou les pièces à un endroit où le métal constitutif des pièces n'a pas été fondu par le faisceau, c'est-à-dire que le jet de gaz va aller impacter la surface supérieure des pièces qui est en regard de la tête laser.

Par générateur laser de type CO₂, on entend un dispositif ou une source de d'énergie permettant de générer un faisceau laser ayant une longueur d'onde de 10.6 µm environ, alors que par « une ou des pièces métalliques », on entend deux pièces métalliques distinctes l'une de l'autre, ou une seule pièce avec elle-même, par exemple les deux bords longitudinaux d'une feuille métallique mise en forme de O, puis soudée de manière à obtenir un tube soudé, ou encore deux éléments d'une même pièce qui sont soudés entre eux.

Selon le cas, le procédé de l'invention peut comprendre l'une ou plusieurs des caractéristiques suivantes :
- à l'étape a), le gaz ou mélange gazeux est distribué à un débit d'au moins 20 l/min.
- à l'étape c), la fusion et la vaporisation du métal constitutif des pièces métalliques est opérée progressivement par déplacement relatif du faisceau par rapport aux pièces à souder, tout au long du plan de joint.
- on oriente le jet de gaz de manière à ce que la distance (D) entre l'axe dudit jet de gaz et l'axe du faisceau laser, mesurée entre les points d'impact dudit jet de gaz et dudit faisceau laser sur la surface supérieure des pièces à souder, soit supérieure ou égale à 1.5 fois le diamètre (D') interne de la buse délivrant le jet de gaz.
- on positionne l'extrémité du diamètre intérieur de la buse (D') par rapport à la surface supérieure des pièces à une hauteur qui soit comprise entre 1 et 50 mm.
- on positionne la buse par rapport à la surface supérieure des pièces de telle sorte que l'angle (θ) de l'axe du jet de gaz ou de la buse soit compris entre 5° et 70° par rapport à la surface supérieure des pièces, de préférence de l'ordre de 30° à 50°.
- on positionne la buse par rapport au plan de joint de telle sorte que l'angle d'inclinaison (α) de l'axe du cordon de soudure et la projection de l'axe de la buse dans le plan de la tôle à souder, soit compris entre +170° et -170°.
- on distribue le jet de gaz à une vitesse comprise entre 40 et 2000 m/s et/ou à une pression comprise entre 1 et 10 bar.
- la buse possède un ou plusieurs orifices de distribution de gaz.
- la buse a un diamètre interne (D') compris entre 0.5 mm et 20 mm, de préférence entre 2 et 4 mm.
- la ou les pièces sont en d'aluminium ou alliage d'aluminium, en titane ou alliage de titane, magnésium ou alliage de magnésium, en Inconel, en acier ou en acier inoxydable, en particulier en acier revêtu de zinc, d'alliage d'aluminium, de polymère ou plusieurs éléments organiques, notamment de peinture.
- la ou les pièces à souder ont une épaisseur comprise entre 0.1 et 20 mm, suivant l'application considérée, de préférence entre 1 et 10 mm.
- pour les tôles épaisses, c'est-à-dire d'au moins 8 mm, différentes préparations de bords peuvent être considérées, comme la réalisation de chanfreins particuliers, de talons... Dans ce dernier cas, l'épaisseur du talon doit être comprise dans la plage d'épaisseurs entre 0.1 mm et 20 mm, de préférence entre 1 et 10 mm.
- la puissance laser est d'au moins 2 kW, de préférence entre 4 kW et 12 kW.

La description suivante d'un mode de réalisation de l'invention est faite en références aux Figures illustratives annexées et aux exemples donnés ci-après.

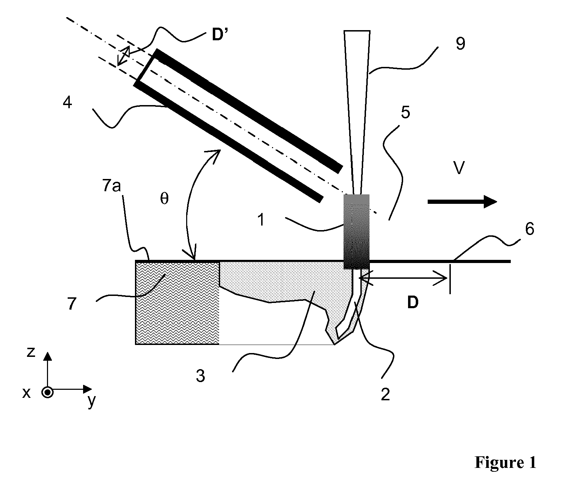

Les figures 1 à 3 illustrent le principe d'un procédé de soudage laser selon un mode de réalisation de l'invention, dans lequel on soude ensemble deux pièces 7 métalliques distinctes l'une de l'autre. Les pièces 7 à souder sont d'abord positionnées l'une contre l'autre de manière à obtenir un plan de joint 8 au niveau duquel viendra frapper le faisceau laser 9 pour fondre le métal qui se re-solidifiera ensuite en donnant un cordon de soudure.

De manière classique, le faisceau laser 9 est obtenu au moyen d'un générateur laser de type CO₂ puis convoyé, via un chemin optique, jusqu'à une tête de focalisation comprenant un ou plusieurs dispositifs optiques de focalisation, tel que lentilles ou miroirs optiques, destinés à focaliser le faisceau dans l'épaisseur des pièces 7 à souder, au niveau de leur plan de joint 8.

Un gaz ou un mélange gazeux de protection est distribué, via une buse 4 de distribution de gaz, en direction de la zone de soudage, c'est-à-dire la zone du plan de joint où le faisceau laser interagit avec le métal en fusion 3, de manière à y opérer une protection gazeuse et éviter la contamination du bain de soudure et donc du cordon de soudage qui en résulte, par des impuretés atmosphériques.

En fait, le faisceau laser 9 vient frapper les pièces 7 à souder et engendre alors une fusion et une vaporisation d'une partie du métal constitutif des pièces métalliques 7 conduisant à la formation, dans l'épaisseur des pièces 7 et au niveau dudit plan de joint 8, d'un capillaire de vapeur métallique 2 ou *keyhole* avec formation concomitante d'un plasma métallique.

Ce plasma métallique, en se propageant hors du capillaire de vapeur 2 métallique, forme une plume 1 de plasma métallique au dessus du plan de joint 8 et donc du bain de métal en fusion 3.

Selon un mode de réalisation de l'invention, la buse 4, c'est-à-dire son axe 5, est orientée de manière à ce que le jet de gaz qu'elle délivre soit orienté en direction de la plume 1 de plasma métallique se formant au dessus du plan de joint 8 mais vienne impacter la surface supérieure 7a d'une ou des tôles 7 en un endroit 6 où le métal n'est pas fondu.

En fait, un rôle de cette buse 4 est de générer un écoulement ou jet de gaz rapide, orienté de manière à ne pas influer directement sur le processus de soudage, tel que le capillaire 2, le bain de métal 3 en fusion ou la plume 1 de plasma métallique. Ce jet de gaz est envoyé au voisinage de la plume 1 de plasma métallique de manière à venir effleurer le sommet de la plume 1 de plasma métallique, c'est-à-dire le sommet de la plume 1 de plasma, comme illustré en Figure 1.

En d'autres termes, le jet de gaz mis en oeuvre selon le procédé de l'invention n'a pas pour vocation d'agir sur le plasma métallique et/ou les particules projetées mais sur l'effet parasite du plasma dans le gaz de protection, ce qui correspond au phénomène de claquage. Le jet de gaz sert donc à limiter cet effet parasite. La buse souffle le plasma de gaz de protection et non pas le plasma de soudage.

Plus précisément, le jet de gaz rapide est destiné à limiter l'ensemencement en électrons libres du gaz de couverture, qui pourrait déclencher l'apparition d'un plasma parasite dans ce dernier, lequel plasma parasite serait préjudiciable à l'opération de soudage car il absorberait une partie de l'énergie du faisceau laser incident 9, ce qui nuirait au processus de soudage laser.

Les particules de gaz de protection ionisées par la plume 1 de plasma métallique sont entraînées par le jet de gaz délivré par la buse 4, hors de la zone du faisceau laser. Dès lors, le phénomène de *Bremsstrahlung Inverse* ne peut avoir lieu et il ne se forme pas de plasma parasite néfaste, au dessus de la plume 1 de plasma métallique.

De préférence, la distance D entre l'axe 5 du jet de gaz ou de la buse 4, et l'axe du faisceau laser doit au mois être égal à 1.5 fois le diamètre D' interne de la buse 4, comme montré en Figure 1.

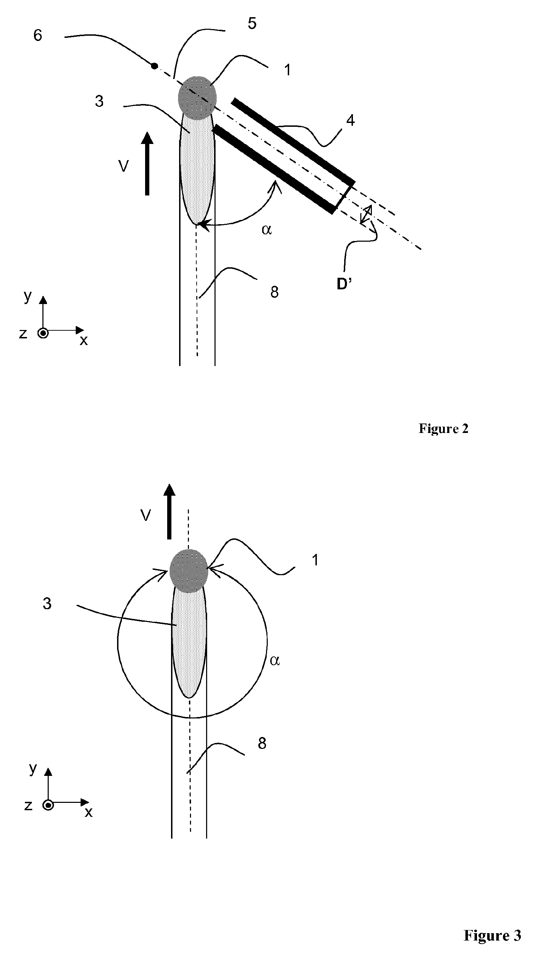

L'orientation du jet gazeux, donc de la buse 4 selon son axe 5, n'est pas nécessairement dans l'axe du cordon 8 de soudure, c'est-à-dire parallèle au sens de soudage V. En effet, le jet gazeux peut arriver de manière latérale, comme illustré en Figure 2 ou avec une orientation quelconque selon un angle α par rapport à l'axe du cordon de soudure. La seule condition à observer est de veiller à ce que le jet gazeux n'interagisse pas avec le bain de métal 3 en fusion.

L'angle (α) entre l'axe du cordon de soudure et la projection de l'axe de la buse dans le plan de la tôle à souder (figure 2), doit être compris entre +170° et -170° de préférence de +150° à -150°. Il est préférable que cette valeur d'angle soit fixe au cours du procédé de soudage laser. Dans l'idéal, la valeur de cet angle doit être proche de 0, ce qui signifie que le point d'impact du jet de gaz coïncide avec la trajectoire présumée du faisceau laser.

L'angle d'inclinaison θ de la buse 4 par rapport à la surface de la ou les tôles 7 est, quant à lui, compris entre 5° et 70°, de préférence 40° à 50°.

La hauteur de la partie basse de la buse par rapport à la surface de la ou des tôles est comprise entre environ 1 et 50 mm, de préférence d'au moins 4 mm et/ou d'au plus 10 mm, préférentiellement d'au plus 8 mm.

La forme de la section de sortie de la buse 4 n'a pas d'importance, par exemple elle peut être ronde, ovoïde, carrée, rectangulaire, trapézoïdale... Néanmoins, on utilisera préférentiellement une buse cylindrique à section de sortie circulaire.

La buse peut comporter plusieurs orifices de sortie de gaz. Le diamètre interne de la buse utilisée est avantageusement compris entre environ 0.5 mm et 20 mm, de préférence d'au moins 1 à 2 mm et d'au plus 10 mm, préférentiellement d'au plus 4 mm environ, mesurée au niveau de l'extrémité de sortie de la buse 4 par laquelle sort le jet gazeux.

La vitesse du gaz en sortie de buse doit être comprise entre 40 et 2000 m/sec, de préférence d'au moins 100 à 150 m/sec environ et/ou d'au plus 500 m/sec, préférentiellement d'au plus 250 m/sec. La pression du gaz doit être comprise entre environ 1 bar et 10 bar, de préférence entre 2 bar et 5 bar, préférentiellement d'au plus 4 bar environ.

Grâce au procédé de l'invention, il est désormais possible d'utiliser des gaz de protection autre que l'hélium, en particulier lorsque le dispositif laser servant à générer le faisceau est de type CO₂ et ce, quelles que soient la puissance et les conditions de focalisation du faisceau laser incident mis en oeuvre, en particulier pour les puissances laser inférieures à 45 kW, de préférence inférieures à 20 kW.

Ainsi, peuvent être utilisés des gaz ou mélanges gazeux formés de ou contenant l'un ou plusieurs des constituants suivants : Ar, N₂, O₂, CO₂, le procédé de l'invention fonctionnant parfaitement sans hélium.

Il est à noter cependant que les gaz comburants de type H₂, CH₄..., ne peuvent pas être utilisés en mélange avec les gaz précédent au-delà de leurs seuils de détonation et d'inflammabilité pour des raisons évidentes de sécurité.

### Exemples

Des tests visant à vérifier l'efficacité du procédé de soudage laser de l'invention ont été réalisés avec un générateur laser de type CO₂, délivrant une puissance jusqu'à 12kW et focalisé par un miroir en cuivre parabolique de distance focale de 250 mm, une buse cylindrique de diamètre interne 2 mm.

La hauteur buse/pièces était de l'ordre de 6 mm et son inclinaison (angle θ) de 45° environ. L'axe de la buse distribuant les gaz a été positionné à l'avant du point d'impact du faisceau laser sur le plan de joint (α=0) à une distance de 3 mm, comme illustré en Figure 1.

Les pièces ont été soudées par laser avec chacun des gaz suivants :
- Ar délivré à 15 l/min, 30 l/min et 45 l/min
- N₂ délivré à 15 l/min, 30 l/min et 45 l/min
- CO₂ délivré à 15 l/min, 30 l/min et 45 l/min
- et, à titre comparatif, avec de l'hélium délivré à 30 l/min selon un procédé classique de l'art antérieur, à savoir en utilisant une buse cylindrique classique de diamètre intérieur 10 mm, orienté à 45° par rapport à la surface de la tôle et dont l'axe coïncide avec le point d'impact du faisceau laser focalisé.

Les essais de soudage ont été réalisés sur plusieurs types de pièces positionnées, puis soudées bord à bord, selon les Exemples ci-dessous.

Dans tous les cas, le jet de gaz de protection est délivré par la buse en direction de la plume de plasma métallique se formant au dessus du plan de joint entre les pièces à souder ensemble.

### Exemple 1 : tôles zinguées d'épaisseurs différentes

Les pièces en acier revêtues d'une couche surfacique de zinc ont été soudées dans une configuration de soudage couramment utilisée dans le secteur de la fabrication de carrosseries de véhicules automobiles, appelée configuration de type « flancs raboutés ».

Plus précisément, les arêtes des tôles ont été positionnées bord à bord avec un jeu limité entre les pièces.

Les épaisseurs de tôles peuvent être identiques ou différentes.

Les tests ont été d'abord réalisés sur 2 tôles d'épaisseurs différentes (1.9 mm et 0.7 mm) positionnées bord à bord, puis soudées en mettant en oeuvre :
- une puissance laser de 6 kW,
- une vitesse de soudage de 5 m/min,
- une buse tubulaire ayant une inclinaison de 45° par rapport à la surface des tôles, et
- l'impact de l'axe du jet de gaz est à environ 4 mm devant le point d'impact du faisceau. (α=0),

### Exemple 2 : tôles zinguées de mêmes épaisseur

Les conditions des essais réalisés dans le cadre de l'Exemple 2 sont analogues à celles de l'Exemple 1, mis à part que :
- les 2 tôles ont une même épaisseur de 1.2 mm chacune et
- la vitesse de soudage est de 6.5 m/min.

### Exemple 3 : tube en acier

Dans cet Exemple 3, le soudage est opéré sur une tôle en acier inoxydable de 2 mm d'épaisseur, mise en forme de pré-tube par rapprochement de ses bords longitudinaux l'un de l'autre de manière à obtenir une section en O, et soudage subséquent de ces bords l'un avec l'autre pour obtenir un tube soudé. Les bords de la tôle sont donc juxtaposés en configuration bord à bord avec un jeu et un désalignement en hauteur limité, avant d'être soudés ensemble.

Les conditions de ces essais sont :
- une puissance laser de 5 kW,
- une vitesse de soudage de 4 m/min,
- une buse tubulaire ayant une inclinaison de 45° par rapport à la surface des tôles,
- l'impact de l'axe du jet de gaz est à environ 6 mm devant le point d'impact du faisceau laser (que α=0).

Les résultats ont été confirmés en positionnant l'impact de l'axe du jet de gaz sur la partie solide latérale, tel que α=90°, à une distance de 6 mm. Les résultats obtenus sont les mêmes que pour une orientation α=0.

### Exemple 4 : pièces en acier doux de 5 mm recouvertes de peinture

Dans cet Exemple 4, on opère un soudage de pièces en acier doux, de même épaisseur (5 mm), recouvertes de peinture du type de celles qui sont typiquement utilisées dans la fabrication de navires sur les chantiers navals.

Les conditions de ces essais sont :
- une puissance laser de 10 kW,
- une vitesse de soudage de 2.5 m/min,
- une buse tubulaire ayant une inclinaison de 40° par rapport à la surface des tôles,
- l'impact de l'axe du jet de gaz est à environ 6 mm devant le point d'impact du faisceau laser (α=0),

Les résultats ont été confirmés en positionnant l'impact de l'axe du jet de gaz sur la partie solide latérale, tel que α=90°, à une distance de 6 mm. Les résultats obtenus sont les mêmes dans les deux orientations : α=0 et α=90°.

### Exemple 5 : pièces en acier doux de 8 mm recouvertes de peinture

L'Exemple 5 est analogue à l'Exemple 4, mis à part que les pièces ont une épaisseur de 8 mm, ce qui implique une légère variation de certaines des conditions d'essais, à savoir :
- une vitesse de soudage de 1.2 m/min, et
- un impact de l'axe du jet de gaz à environ 2.5 mm devant le point d'impact du faisceau laser.

Le Tableau ci-après résume les résultats obtenus lors de des essais par comparaison avec un soudage laser opéré avec un procédé standard sous hélium servant de référence (légende : 0 = résultat équivalent ; 1 = meilleur résultat, 2 = moins bon résultat).

**Tableau**

| | | Gaz à 30 l/min | Ex. 1 | Ex. 2 | Ex. 3 | Ex. 4 | Ex. 5 |
|---|---|---|---|---|---|---|---|
| | Qualité des cordons côtés endroit et envers | Ar | 0 | 0 | 0 | 0 | 0 |
| | | CO₂ | 0 | 0 | 0 | 0 | 0 |
| | | N₂ | 0 | 0 | 2 | 2 | 2 |
| | Dépôts de fumée de part et d'autre du cordon | Ar | 1 | 1 | 1 | 1 | 1 |
| | | CO₂ | 1 | 1 | 1 | 1 | 1 |
| 30 l/min | | N₂ | 1 | 1 | 2 | 2 | 2 |
| | Porosités ou soufflures dans le cordon | Ar | 0 | 0 | 0 | 0 | 0 |
| | | CO₂ | 0 | 0 | 0 | 0 | 0 |
| | | N₂ | 2 | 2 | 2 | 2 | 2 |
| | Pénétration de soudage | Ar | 0 | 0 | 0 | 0 | 0 |
| | | CO₂ | 0 | 0 | 0 | 0 | 0 |
| | | N₂ | 0 | 0 | 0 | 0 | 0 |
| | | | | | | | |

| | | Gaz à 45 l/min | Ex. 1 | Ex. 2 | Ex. 3 | Ex. 4 | Ex. 5 |
|---|---|---|---|---|---|---|---|
| 45 l/min | Qualité des cordons côtés endroit et envers | Ar | 1 | 1 | 1 | 1 | 1 |
| | | CO₂ | 1 | 1 | 0 | 0 | 0 |
| | | N₂ | 0 | 0 | 2 | 2 | 2 |
| | Dépôts de fumée de part et d'autre du cordon | Ar | 1 | 1 | 1 | 1 | 1 |
| | | CO₂ | 1 | 1 | 1 | 1 | 1 |
| | | N₂ | 1 | 1 | 2 | 2 | 2 |
| | Porosités ou | Ar | 0 | 0 | 1 | 1 | 1 |
| | soufflures dans le cordon | CO₂ | 0 | 0 | 1 | 1 | 1 |
| | | N₂ | 2 | 2 | 2 | 2 | 2 |
| | Pénétration de soudage | Ar | 0 | 0 | 0 | 0 | 0 |
| | | CO₂ | 0 | 0 | 0 | 0 | 0 |
| | | N₂ | 0 | 0 | 0 | 0 | 0 |
| | | | | | | | |

| | | Gaz à 15 l/min | Ex. 1 | Ex. 2 | Ex. 3 | Ex. 4 | Ex. 5 |
|---|---|---|---|---|---|---|---|
| 15 l/min | | Ar | Pas de couplage laser matière efficace au procédé de soudage laser | | | | |
| | | CO₂ | | | | | |
| | | N₂ | | | | | |

La surface des cordons de soudure obtenus, lors des essais réalisés dans le cadre des Exemples ci-dessus avec les gaz testés (Ar, N₂, CO₂) à 30 l/min et 45 l/min, a été examinée visuellement et il a été constaté que la qualité des cordons obtenus avec le procédé de l'invention, c'est-à-dire que l'aspect des cordons du côté endroit et du côté envers, et est équivalente (0) à celle obtenue avec l'hélium mis en oeuvre selon un procédé de soudage laser standard (référence).

Cependant, de manière avantageuse, les cordons obtenus avec le procédé de l'invention présente moins de dépôts de fumées (1) de part et d'autre du cordon de soudure qu'avec le procédé standard sous hélium.

Par ailleurs, les macrographies des sections des cordons ont montrées que les sections des soudures sont elles-aussi identiques (0) à la référence obtenue avec de l'hélium. En effet, les radiographies des cordons confirment le fait que les cordons ne présentent pas plus de porosités ou soufflures dans les cordons que ceux obtenus via le procédé de référence avec de l'hélium

Il est à souligner toutefois que l'utilisation d'azote peut influer un peu sur la métallurgie des cordons obtenus dans certaines conditions de soudage.

Dans tous les cas, la pénétration de soudage est également équivalente (0) à celle obtenue sous hélium avec le procédé standard.

Ces essais montrent que l'on peut mettre en oeuvre efficacement un procédé de soudage laser avec générateur de type CO₂ à forte puissance avec d'autres gaz que l'hélium et ce, sans nuire à la qualité et l'aspect des cordons de soudure réalisés, ni à la pénétration de soudage, comme testé avec succès sur différents matériaux et configurations de soudage dans les Exemples ci-avant.

Il existe une plage de fonctionnement en débit caractéristique de l'invention. Ainsi, pour les faibles débits, c'est-à-dire à dire moins de 20 l/min environ, l'effet de limitation de l'ionisation de la plume de plasma métallique à l'environnement gazeux n'est plus efficace. Il se forme un plasma parasite au dessus de la plume de plasma métallique. Ainsi, les essais réalisés à un débit de 15 l/min confirment ce point. Dans ces conditions, le couplage entre le faisceau laser et le matériau n'est plus efficace et il n'y a pas de soudage des tôles. Cet effet est indépendant de la nature des gaz. Le débit est donc un paramètre qu'il est nécessaire de prendre en compte pour améliorer encore les résultats obtenus lors de la mise d'un procédé selon l'invention.

En fait, l'utilisation de la buse de soudage orientée selon l'invention, c'est-à-dire de manière à générer un jet de gaz rapide au voisinage de la plume de plasma métallique de manière à venir effleurer le sommet de la plume de plasma métallique, permet de limiter l'ensemencement en électrons libres du gaz de couverture, donc empêcher l'apparition d'un plasma parasite qui serait préjudiciable à l'opération de soudage car il absorberait une partie de l'énergie du faisceau laser incident, ce qui nuirait au processus de soudage laser.

Ceci permet dès lors de pouvoir mettre en oeuvre le procédé de soudage à puissance élevée, c'est-à-dire typiquement entre 4 et 20 kW, en utilisant des gaz ou mélanges gazeux sans hélium, en particulier des gaz tels que Ar, N₂, CO₂, O₂ et leurs mélanges.

## Revendications

1. Procédé de soudage laser d'une ou plusieurs pièces métalliques positionnées l'une contre l'autre selon un plan de joint, dans lequel :
a) on alimente une buse avec un gaz ou un mélange gazeux et on distribue, au moyen de ladite buse, un jet de gaz de protection formé dudit gaz ou mélange gazeux en direction du plan de joint,
b) on opère, au moyen d'un faisceau laser généré par un générateur laser de type CO₂, une fusion et une vaporisation du métal constitutif des pièces métalliques conduisant à la formation d'une plume de plasma métallique au dessus du plan de joint,
**caractérisé en ce que** :
à l'étape a), on utilise un gaz ou mélange gazeux constitué de l'un ou plusieurs des constituants du groupe formé par Ar, N₂, CO₂ et O₂, et
d) on oriente ou on dirige le jet de gaz de protection délivré par la buse en direction de la plume de plasma métallique se formant au dessus du plan de joint de manière à ce qu'il vienne effleurer le sommet de la plume de plasma métallique et impacter l'une ou les pièces à un endroit où le métal constitutif des pièces n'a pas été fondu par le faisceau, c'est-à-dire que le jet de gaz est envoyé au voisinage de la plume de plasma métallique de manière à venir effleurer le sommet de la plume de plasma métallique.

2. Procédé selon la revendication 1, **caractérisé en ce qu'**à l'étape a), le gaz ou mélange gazeux est distribué à un débit d'au moins 20 l/min.

3. Procédé selon l'une des revendications précédentes, **caractérisé en ce qu'**à l'étape c), la fusion et la vaporisation du métal constitutif des pièces métalliques est opérée progressivement par déplacement relatif du faisceau par rapport aux pièces à souder, tout au long du plan de joint.

4. Procédé selon l'une des revendications précédentes, **caractérisé en ce qu'**on oriente le jet de gaz de manière à ce que la distance (D) entre l'axe dudit jet de gaz et l'axe du faisceau laser, mesurée entre les points d'impact dudit jet de gaz et dudit faisceau laser sur la surface supérieure des pièces à souder, soit supérieure ou égale à 1.5 fois le diamètre (D') interne de la buse délivrant le jet de gaz.

5. Procédé selon l'une des revendications précédentes, **caractérisé en ce qu'**on positionne l'extrémité du diamètre intérieur de la buse (D') par rapport à la surface supérieure des pièces à une hauteur qui soit comprise entre 1 mm et 50 mm.

6. Procédé selon l'une des revendications précédentes, **caractérisé en ce qu'**on positionne la buse par rapport au plan de joint de telle sorte que l'angle d'inclinaison (α) de l'axe du cordon de soudure et la projection de l'axe de la buse dans le plan de la tôle à souder, soit compris entre +170° et -170°.

7. Procédé selon l'une des revendications précédentes, **caractérisé en ce qu'**on positionne la buse par rapport à la surface supérieure des pièces de telle sorte que l'angle (θ) de l'axe du jet de gaz ou de la buse soit compris entre 5° et 70° par rapport à la surface supérieure des pièces.

8. Procédé selon l'une des revendications précédentes, **caractérisé en ce qu'**on distribue le jet de gaz à une vitesse comprise entre 40 et 2000 m/sec.

9. Procédé selon l'une des revendications précédentes, **caractérisé en ce que** la ou les pièces sont en acier revêtu de zinc, d'alliage d'aluminium, de polymère ou d'un ou plusieurs éléments organiques, notamment de peinture.

## Patentansprüche

1. Verfahren zum Laserschweißen eines oder mehrerer Metallteile, die in einer Verbindungsebene gegeneinander angeordnet sind, bei dem:
a) eine Düse mit einem Gas oder einem gasförmigen Gemisch gespeist wird und, mittels der Düse, ein Schutzgasstrahl, der von dem Gas oder gasförmigen Gemisch gebildet wird, in Richtung der Verbindungsebene verteilt wird,
b) mittels eines Laserstrahls, der von einem Lasergenerator des Typs CO₂ erzeugt wird, eine Schmelzung und eine Verdampfung des Metalls, aus dem die Metallteile bestehen, durchgeführt wird, welche zur Bildung einer metallischen Plasmafahne oberhalb der Verbindungsebene führt,
**dadurch gekennzeichnet, dass**:
in Schritt a) ein Gas oder gasförmiges Gemisch verwendet wird, das aus einem oder mehreren der Bestandteile der Gruppe besteht, die von Ar, N₂, CO₂ und O₂ gebildet wird, und
d) der Schutzgasstrahl, der durch die Düse bereitgestellt wird, in Richtung der metallischen Plasmafahne, die sich oberhalb der Verbindungsebene bildet, orientiert oder gerichtet wird, derart, dass er die Spitze der metallischen Plasmafahne streift und auf das oder die Teile an einer Stelle auftrifft, wo das Metall, aus dem die Teile bestehen, nicht durch den Strahl geschmolzen wurde, das heißt, dass der Gasstrahl in die Nähe der metallischen Plasmafahne gesendet wird, derart, dass er die Spitze der metallischen Plasmafahne streift.

2. Verfahren nach Anspruch 1, **dadurch gekennzeichnet, dass** in Schritt a) das Gas oder gasförmige Gemisch mit einem Durchsatz von mindestens 20 l/min verteilt wird.

3. Verfahren nach einem der vorhergehenden Ansprüche, **dadurch gekennzeichnet, dass** in Schritt c) die Schmelzung und die Verdampfung des Metalls, aus dem die Metallteile bestehen, progressiv durch relative Bewegung des Strahls relativ zu den zu verschweißenden Teilen, entlang der gesamten Verbindungsebene, durchgeführt wird.

4. Verfahren nach einem der vorhergehenden Ansprüche, **dadurch gekennzeichnet, dass** der Gasstrahl derart orientiert wird, dass der Abstand (D) zwischen der Achse des Gasstrahls und der Achse des Laserstrahls, gemessen zwischen den Auftreffpunkten des Gasstrahls und des Laserstrahls auf der oben liegenden Fläche der zu verschweißenden Teile, größer oder gleich dem 1,5-Fachen des Innendurchmessers (D') der Düse ist, die den Gasstrahl bereitstellt.

5. Verfahren nach einem der vorhergehenden Ansprüche, **dadurch gekennzeichnet, dass** das Ende des Innendurchmessers der Düse (D') in Bezug zu der oben liegenden Fläche der Teile in einer Höhe platziert wird, die zwischen 1 mm und 50 mm beträgt.

6. Verfahren nach einem der vorhergehenden Ansprüche, **dadurch gekennzeichnet, dass** die Düse in Bezug zu der Verbindungsebene so platziert wird, dass der Neigungswinkel (α) der Achse der Schweißnaht und der Projektion der Achse der Düse in der Ebene des zu verschweißenden Blechs zwischen +170° und -170° beträgt.

7. Verfahren nach einem der vorhergehenden Ansprüche, **dadurch gekennzeichnet, dass** die Düse in Bezug zu der oben liegenden Fläche der Teile so platziert wird, dass der Winkel (θ) der Achse des Gasstrahls oder der Düse zwischen 5° und 70° in Bezug zu der oben liegenden Fläche der Teile beträgt.

8. Verfahren nach einem der vorhergehenden Ansprüche, **dadurch gekennzeichnet, dass** der Gasstrahl mit einer Geschwindigkeit zwischen 40 und 2.000 m/s verteilt wird.

9. Verfahren nach einem der vorhergehenden Ansprüche, **dadurch gekennzeichnet, dass** das oder die Teile aus Stahl sind, das mit Zink, Aluminiumlegierung, Polymer oder einem oder mehreren organischen Elementen, insbesondere Lack, beschichtet ist.

## Claims

1. Method for laser welding one or more metal parts positioned against one another along a junction plane, in which:
a) a nozzle is fed with a gas or a gas mixture and said nozzle is used to send a jet of protecting gas formed from said gas or gas mixture toward the junction plane,
b) a laser beam, generated using a CO₂ laser generator, is used to melt and vaporise the metal of the metal parts, leading to the formation of a metal plasma plume above the junction plane
**characterised in that**:
in the step a), a gas or a gas mixture is used constituted of one or several of the constituents of the group formed by Ar, N₂, CO₂ and O₂, and
d) the protecting gas jet delivered by the nozzle is directed or sent toward the metal plasma plume being formed above the junction plane, such that the protecting gas jet is flush with the top of the metal plasma plume and impinges on a part or the parts at a place where the metal of the parts has not been melted by the beam, that is to say that the gas jet is sent in the vicinity of the metal plasma plume such that the gas jet is flush with the top of said metal plasma plume.

2. Method according to claim 1, **characterised in that** in step a), the gas or gas mixture is sent at a flow rate of 20 l/min.

3. Method according to any of the preceding claims, **characterised in that** in step c), the metal of the metal parts is melted and vaporised progressively by a relative movement of the beam with regard to the parts to be welded, all along the junction plane.

4. Method according to any of the preceding claims, **characterised in that** the gas jet is directed so that the distance (D) between the axis of said gas jet and the axis of the laser beam, measured between the impact points of said gas jet and said laser beam on the upper surface of the parts to be welded, is equal to or greater than 1.5 times the inside diameter (D') of the nozzle delivering the gas jet.

5. Method according to any of the preceding claims, **characterised in that** the end of the inside diameter (D') of the nozzle is positioned with regard to the upper surface of the parts at a height of from 1 mm to 50 mm.

6. Method according to any of the preceding claims, **characterised in that** the nozzle is positioned with regard to the junction plane so that the angle of inclination (α) of the axis of the weld bead to the projection of the axis of the nozzle in the plane of the plate to be welded is between +170° and -170°.

7. Method according to any of the preceding claims, **characterised in that** the nozzle is positioned with regard to the upper surface of the parts so that the angle (θ) of the axis of the gas jet or of the nozzle is between 5° and 70° to the upper surface of the parts.

8. Method according to any of the preceding claims, **characterised in that** the gas jet is distributed at a speed between 40 to 2000 m/sec.

9. Method according to any of the preceding claims, **characterised in that** the part or parts are made of steel plated with zinc, aluminium alloy, a polymer, or one or more organic elements, more particularly paint.
